# EUROPEAN PATENT APPLICATION

(11) **EP 4 836 024 A1**
(43) Date of publication of application: **04.11.2026**
(21) Application number: 25855577.0
(22) Date of filing: 25.03.2025
(51) Int. Cl.: H01M 4/62

(54) **BATTERY CELL, BATTERY DEVICE, AND ELECTRIC DEVICE**

(30) Priority: 22.08.2024 CN 202411161646
(71) Applicant: Contemporary Amperex Technology Co., Limited, Ningde, Fujian 352100 (CN)
(72) Inventor: JING, Erdong, Ningde, Fujian 352100 (CN); CHEN, Xiao, Ningde, Fujian 352100 (CN); LIU, Huanji, Ningde, Fujian 352100 (CN); XIE, Haotian, Ningde, Fujian 352100 (CN); ZHANG, Nannan, Ningde, Fujian 352100 (CN); HE, Yong, Ningde, Fujian 352100 (CN); SUN, Hongliang, Ningde, Fujian 352100 (CN)
(74) Representative: Aera A/S
(86) International application number: PCT/CN2025/084700
(87) International publication number: WO 2026/040400

(57) **Abstract**

The present application discloses a battery cell, a battery device, and an electric device. The battery cell comprises a positive electrode sheet and a negative electrode sheet; in the positive electrode sheet, a positive electrode active material layer comprises a positive electrode active material, the positive electrode active material comprises a multi-element active material and a lithium supplementing agent, the multi-element active material comprises a layered metal oxide containing nickel, cobalt and manganese elements, and based on the total molar weight of the nickel, cobalt and manganese elements, the molar ratio of the nickel element is greater than or equal to 80%; or the multi-element active material comprises a layered metal oxide containing nickel, cobalt and aluminum elements, and based on the total molar weight of the nickel, cobalt and aluminum elements, the molar ratio of the nickel element is greater than or equal to 80%; the lithium supplementing agent comprises a nickel-containing metal oxide and/or an iron-containing metal oxide; and in the negative electrode sheet, the negative electrode active material layer comprises a negative electrode active material, and the negative electrode active material comprises graphite and a silicon-based material.

## Description

### CROSS-REFERENCE TO RELATED APPLICATIONS

The present application claims priority to Chinese Patent Application No. 202411161646.8 filed on August 22, 2024, which is incorporated herein by reference in its entirety.

### TECHNICAL FIELD

The present application belongs to the field of battery technologies, and specifically, to a battery cell, a battery device, and an electric device.

### BACKGROUND

Secondary batteries are used not only in energy storage power systems such as hydropower, thermal power, wind power, and solar power plants, but also in electric tools such as electric bicycles, electric motorcycles, and electric vehicles, as well as military equipment, aerospace, and many other fields. With the development of current society, people's demands for batteries are increasingly high, such as high energy density or long service life.

### SUMMARY

In view of the technical problems in the background, the present application provides a battery cell, intending to achieve high energy density and a long cycle life.

To achieve the foregoing objective, according to a first aspect of the present application, a battery cell is provided, comprising:
a positive electrode sheet, the positive electrode sheet comprising a positive electrode current collector and a positive electrode active material layer disposed on at least one side of the positive electrode current collector, the positive electrode active material layer comprising a positive electrode active material, and the positive electrode active material comprising a multi-element active material and a lithium supplementing agent, wherein
the multi-element active material comprises a layered metal oxide containing nickel, cobalt and manganese elements, and in the layered metal oxide containing the nickel, cobalt and manganese elements, based on the total molar weight of the nickel, cobalt and manganese elements, the molar ratio of the nickel element is greater than or equal to 80%; or the multi-element active material comprises a layered metal oxide containing nickel, cobalt and aluminum elements, and in the layered metal oxide containing the nickel, cobalt and aluminum elements, based on the total molar weight of the nickel, cobalt and aluminum elements, the molar ratio of the nickel element is greater than or equal to 80%; and
the lithium supplementing agent comprises a nickel-containing metal oxide and/or an iron-containing metal oxide; and
a negative electrode sheet, the negative electrode sheet comprising a negative electrode current collector and a negative electrode active material layer disposed on at least one side of the negative electrode current collector, the negative electrode active material layer comprising a negative electrode active material, and the negative electrode active material comprising graphite and a silicon-based material.

The battery cell according to the first aspect of the present application has at least the following beneficial effects: on the basis of improving the energy density of the battery, the content of active lithium on the negative electrode side can be effectively increased, thereby alleviating the problem that the relatively small particle size of the silicon-containing material leads to an increased consumption of the active lithium during the formation of an SEI film, which adversely affects the initial cycle efficiency, and also alleviating the problem that due to large expansion of the silicon-containing material itself, the silicon-containing material is easily damaged or pulverized during cycling, which in turn leads to the rupture and regeneration of the SEI film, consumes more active lithium, and degrades the cycle performance of the battery cell. Therefore, the battery can achieve both relatively high energy density and a relatively long cycle life.

In some embodiments of the present application, the silicon-based material comprises a silicon-oxygen compound and/or a silicon-carbon compound. In this way, it is beneficial for further improving the energy density of the battery.

According to some embodiments of the present application, based on the total mass of the negative electrode active material, the mass ratio of the silicon element is 0.3% to 10%. In this way, it is beneficial for enabling the battery to achieve relatively high energy density, relatively high initial efficiency, and a relatively long cycle life.

In some embodiments of the present application, the silicon-based material comprises a silicon-oxygen compound, and based on the total mass of the negative electrode active material, the mass ratio of the silicon element is 0.5% to 5%. In this way, it is beneficial for enabling the battery to achieve relatively high energy density, relatively high initial efficiency, and a relatively long cycle life.

In some embodiments of the present application, the silicon-based material comprises a silicon-carbon compound, and based on the total mass of the negative electrode active material, the mass ratio of the silicon element is 3% to 10%. In this way, it is beneficial for enabling the battery to achieve relatively high energy density, relatively high initial efficiency, and a relatively long cycle life.

In some embodiments of the present application, the longitudinal section of the positive electrode sheet along the thickness direction comprises multi-element active material particles and lithium supplementing agent particles, the lithium supplementing agent particles comprise a transition metal element, the transition metal element comprises a nickel element, and in a single lithium supplementing agent particle, based on the total molar weight of the transition metal element, the molar ratio of the nickel element is n₁; and the multi-element active material particles comprise a layered metal oxide containing nickel, cobalt and manganese elements, and in a single multi-element active material particle, based on the total molar weight of the nickel, cobalt and manganese elements, the molar ratio of the nickel element is n₂, and the ratio of n₁ to n₂ is 1: (0.8 to 0.96); or the multi-element active material particles comprise a layered metal oxide containing nickel, cobalt and aluminum elements, and in a single multi-element active material particle, based on the total molar weight of the nickel, cobalt and aluminum elements, the molar ratio of the nickel element is n₃, and the ratio of n₁ to n₃ is 1: (0.8 to 0.96).

In some embodiments of the present application, the positive electrode active material further comprises one or more of the following elements: P, Al, Mg, Zr, B, and Ti, based on the total mass of the positive electrode active material, the contents of the P element, the Al element, the Mg element, the Zr element, the B element, and the Ti element are each independently less than or equal to 7,000 ppm. In this way, it is beneficial for enabling the battery to achieve relatively high energy density and relatively good cycle performance.

In some embodiments of the present application, the positive electrode active material comprises a P element, and based on the total mass of the positive electrode active material, the content of the P element is 50 ppm to 3,000 ppm.

In some embodiments of the present application, the positive electrode active material comprises an Al element, and based on the total mass of the positive electrode active material, the content of the Al element is 50 ppm to 3,000 ppm, optionally 300 ppm to 2,000 ppm.

In some embodiments of the present application, the positive electrode active material comprises a Mg element, and based on the total mass of the positive electrode active material, the content of the Mg element is 50 ppm to 3,000 ppm.

In some embodiments of the present application, the positive electrode active material comprises a Zr element, and based on the total mass of the positive electrode active material, the content of the Zr element is 50 ppm to 4,000 ppm, optionally 2,000 ppm to 4,000 ppm.

In some embodiments of the present application, the positive electrode active material comprises a B element, and based on the total mass of the positive electrode active material, the content of the B element is 50 ppm to 7,000 ppm, optionally 500 ppm to 7,000 ppm.

In some embodiments of the present application, the positive electrode active material comprises a Ti element, and based on the total mass of the positive electrode active material, the content of the Ti element is 5 ppm to 3,000 ppm.

In some embodiments of the present application, at least a part of the surface of the lithium supplementing agent is provided with a coating layer, and the coating layer comprises one or more of the following elements: C, Al, Zr, P, and S. In this way, it is beneficial for improving the air stability of the lithium supplementing agent, and reduce the generation of lithium-containing impurities on the surface.

In some embodiments of the present application, the coating layer comprises one or more of a carbon material, an aluminum oxide, a zirconium oxide, a lithium phosphide, and a lithium sulfide. In this way, it is beneficial for further improving the electrochemical performance of the battery.

In some embodiments of the present application, the multi-element active material comprises secondary particles, and the surface roughness of the secondary particles is greater than the surface roughness of the lithium supplementing agent particles.

In some embodiments of the present application, the secondary particles are spherical or spheroidal.

In some embodiments of the present application, the positive electrode active material layer further comprises a conductive agent, and the conductive agent comprises conductive carbon black and carbon nanotubes. In this way, not only the conductivity of the electrode sheet can be improved, but also the decomposition of the lithium supplementing agent and the dynamic performance of the battery can be improved.

In some embodiments of the present application, the lithium supplementing agent comprises LiₓM1_{y}M2_{g}O_{z}, wherein 1 ≤ x ≤ 6, 1 ≤ y ≤ 6, 2 ≤ z ≤ 12, 0 ≤ g ≤ 0.05, M1 comprises one or more of Na, Ni, Co, Mn, and Fe elements, and M2 comprises one or more of Al, Zr, and B elements. In this way, it can achieve a relatively good lithium supplementation effect, and enable the battery to achieve relatively high energy density, relatively high initial efficiency, and a relatively long cycle life.

In some embodiments of the present application, the lithium supplementing agent comprises Li₂NiO₂ and/or Li₅FeO₄. In this way, it can better improve the initial efficiency and the energy density of the battery, thereby enabling the battery to achieve relatively high energy density, relatively high initial efficiency, and a relatively long cycle life.

In some embodiments of the present application, the lithium supplementing agent comprises LiₙNiOₘ and/or LiₚFeO_{q}, wherein 0 ≤ n ≤ 2, 0 < m ≤ 2, 0 < p ≤ 5, and 0 < q ≤ 4.

In some embodiments of the present application, the lithium supplementing agent comprises NiOₘ and/or LiₚFeO_{q}, wherein 0 < m ≤ 2, 0 < p ≤ 1, and 0 < q ≤ 2.

In some embodiments of the present application, the general formula of the multi-element active material is LiₐNi_{b}Co_{c}M3_{d}M4ₑO_{f}, wherein 0.5 ≤ a ≤ 1.2, 0.8 ≤ b ≤ 0.96, 0 < c < 1, 0 < d < 1, 0 ≤ e ≤ 0.03, b + c + d + e = 1,1.8 ≤ f ≤ 3.5, and M3 comprises a Mn element or an Al element; and M4 comprises one or more of the following elements: Na, K, Mg, B, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce, and F. In this way, the energy density and the cycle performance of the battery can be better balanced, and the service life of the battery can be prolonged.

In some embodiments of the present application, M4 comprises one or more of the following elements: Al, Mg, Zr, B, P, and Ti. In this way, it can further enable the battery to achieve both relatively high energy density and relatively good cycle stability, and prolong the service life of the battery.

In some embodiments of the present application, the battery cell is a pouch battery, a square battery, a cylindrical battery.

A second aspect of the present application provides a battery device, comprising: the battery cell according to the first aspect of the present application, the battery device comprising at least one of a battery module, a battery pack, and an energy storage device.

A third aspect of the present application provides an electric device, including: the battery cell according to the first aspect of the present application or the battery device according to the second aspect of the present application, wherein the battery cell or the battery device is configured to provide electric energy.

### BRIEF DESCRIPTION OF THE DRAWINGS

The above and/or additional aspects and advantages of the present application will become apparent and more readily appreciated from the following description of the embodiments taken in conjunction with the accompanying drawings, in which:
FIG. 1 is a schematic diagram of a structure of a battery cell according to an implementation of the present application;
FIG. 2 is a schematic diagram of a structure of a battery module according to an implementation of the present application;
FIG. 3 is a schematic diagram of a structure of a battery pack according to an implementation of the present application;
FIG. 4 is an exploded view of FIG. 3; and
FIG. 5 is a schematic diagram of an implementation of an electric device using a battery device according to the present application as a power supply.

### Description of reference signs:

1: Battery cell; 2: Battery module; 3: Battery pack; 4: Upper case; 5: Lower case.

### DETAILED DESCRIPTION OF PREFERRED EMBODIMENTS

The present application will be further described below with reference to specific embodiments. It should be understood that these specific embodiments are merely illustrative of the application and are not intended to limit the scope of the present application.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

The "range" disclosed in this application is limited in the form of a lower limit and an upper limit. A given range is limited by selecting a lower limit and an upper limit, which define the boundaries of the specific range. The range defined in this way may include or not include end values and may be combined arbitrarily, that is, any lower limit may be combined with any upper limit to form a range not explicitly recorded, and any lower limit may be combined with other lower limits to form a range not explicitly recorded, and likewise any upper limit may be combined with any other upper limit to form a range not explicitly recorded. In addition, each individually disclosed point or individual value may itself be combined as a lower limit or an upper limit with any other point or individual value, or with other lower or upper limits, to form a range not explicitly recorded.

Unless otherwise specified, all implementations and optional implementations of the present application may be combined with each other to form new technical solutions, and it is conceivable that such technical solutions should be included in the disclosure of the present application.

Unless otherwise specified, all technical solutions and optional technical solutions of the present application may be combined with each other to form new technical solutions, and it is conceivable that such technical solutions should be included in the disclosure of the present application.

Unless otherwise specified, all steps in the present application may be performed sequentially or randomly, preferably sequentially. For example, the method includes steps S1 and S2, meaning that the method may include steps S1 and S2 performed sequentially or steps S2 and S1 performed sequentially. For example, the above-mentioned method may further include step S3, meaning that step S3 may be added to the method in any order, e.g. the method may include steps S1, S2, and S3, or steps S1, S3, and S2, or steps S3, S1, and S2, and the like.

Unless otherwise specified, in the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the present application, the terms "a plurality of" and "various" mean two or more.

Unless otherwise defined, all technical and scientific terms used in the present application have the same meaning as commonly understood by those skilled in the art to which the present application belongs. The terms used herein are merely for the purpose of describing specific embodiments and are not intended to limit the present application. The terms "include/comprise", "be provided with", and any other variants thereof in the specification and claims of the present application are intended to cover a non-exclusive inclusion. Unless otherwise specified, the terms used in the present application have the meanings commonly understood by those skilled in the art. Unless otherwise specified, the numerical values of each parameter mentioned in the present application may be measured by various measuring methods commonly used in the art, for example, according to the methods given in the embodiments of the present application.

Currently, with the constant advancement of the green and environmental-friendly topic, the application of batteries has been advanced into various aspects of life, including vehicles, electronic devices, energy storage devices, and the like. With the continuous expansion of application of the battery, the battery is required for higher and higher reliability. For example, taking lithium-ion batteries as an example, secondary batteries with high energy density and a long cycle life have become an important research direction in the battery industry.

The present application is intended to develop a battery cell with relatively high energy density and a relatively long service life. By comprehensively controlling the compositions of a positive electrode sheet and a negative electrode sheet, using a high-nickel multi-element active material and a lithium supplementing agent as a positive electrode active material in the positive electrode sheet, using graphite and a silicon-based material as a negative electrode active material in the negative electrode sheet, and adjusting the content of nickel in the multi-element active material, a battery cell with high energy density and a long cycle life is developed.

In the positive electrode sheet of the present application, the positive electrode active material includes a multi-element active material and a lithium supplementing agent, where the multi-element active material includes a layered metal oxide containing nickel, cobalt and manganese elements, and in the layered metal oxide containing the nickel, cobalt and manganese elements, based on the total molar weight of the nickel, cobalt and manganese elements, the molar ratio of the nickel element is greater than or equal to 80%; or the multi-element active material includes a layered metal oxide containing nickel, cobalt and aluminum elements, and in the layered metal oxide containing the nickel, cobalt and aluminum elements, based on the total molar weight of the nickel, cobalt and aluminum elements, the molar ratio of the nickel element is greater than or equal to 80%; the lithium supplementing agent includes a nickel-containing metal oxide and/or an iron-containing metal oxide; and in the negative electrode sheet, graphite and a silicon-based material are employed as the negative electrode active material. In this way, on the basis of improving the energy density of the battery, the content of active lithium on the negative electrode side can be effectively increased, thereby alleviating the problem that the relatively small particle size of the silicon-containing material leads to an increased consumption of the active lithium during the formation of an SEI film, which adversely affects the initial cycle efficiency, and also alleviating the problem that due to large expansion of the silicon-containing material itself, the silicon-containing material is easily damaged or pulverized during cycling, which in turn leads to the rupture and regeneration of the SEI film, consumes more active lithium, and degrades the cycle performance of the battery cell. Therefore, the battery can achieve both relatively high energy density and a relatively long cycle life.

The battery cell disclosed in the embodiments of the present application can be used in the electric apparatus using the battery cell or the battery device having the battery cell as a power supply or various energy storage systems using the battery cell or the battery device having the battery cell as an energy storage element. The electric device may comprise, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides a battery cell, including: a positive electrode sheet and a negative electrode sheet. The positive electrode sheet includes a positive electrode current collector, and a positive electrode active material layer disposed on at least one side of the positive electrode current collector, the positive electrode active material layer including a positive electrode active material, and the positive electrode active material including a multi-element active material and a lithium supplementing agent, where the multi-element active material includes a layered metal oxide containing nickel, cobalt and manganese elements, and in the layered metal oxide containing the nickel, cobalt and manganese elements, based on the total molar weight of the nickel, cobalt and manganese elements, the molar ratio of the nickel element is greater than or equal to 80%; or the multi-element active material includes a layered metal oxide containing nickel, cobalt and aluminum elements, and in the layered metal oxide containing the nickel, cobalt and aluminum elements, based on the total molar weight of the nickel, cobalt and aluminum elements, the molar ratio of the nickel element is greater than or equal to 80%; the lithium supplementing agent includes a nickel-containing metal oxide and/or an iron-containing metal oxide; and the negative electrode sheet includes a negative electrode current collector and a negative electrode active material layer disposed on at least one side of the negative electrode current collector, the negative electrode active material layer includes a negative electrode active material, and the negative electrode active material includes graphite and a silicon-based material.

In silicon-containing battery systems, it is difficult to achieve both high energy density and a long cycle life. Although the system of combining the high-nickel positive electrode active material with the silicon-based negative electrode active material helps to increase the gram capacity of the active material in the positive and negative electrode sheets, the introduction of the silicon material presents the following problems: First, compared with graphite, the silicon material has a relatively small particle size, which leads to an increased consumption of active lithium during formation of an SEI film. As a result, the active lithium coming from the positive electrode during a first cycle cannot be intercalated back into the positive electrode active material in sufficient quantity, thereby reducing the initial efficiency of the battery. Therefore, the introduction of the lithium supplementing agent can effectively increase the content of the active lithium on the negative electrode side, alleviate the problem of low initial efficiency caused by the introduction of the silicon material, and thus reduce the cycle capacity fade during long-term cycling. Secondly, compared with graphite, the silicon material itself expands greatly, and is easily broken or pulverized during cycling, resulting in exposure of a new phase interface, thereby promoting the formation of a new SEI film. The generation of the new SEI film in turn leads to continued consumption of the active lithium and degrades the cycle performance of the battery. Therefore, the introduction of the lithium supplementing agent can effectively increase the content of the active lithium on the negative electrode side, supply sufficient lithium for forming the new SEI film, and improve the cycle performance.

In this way, the battery cell according to the first aspect of the present application has at least the following beneficial effects: on the basis of improving the energy density of the battery, the initial efficiency and the cycle performance of the battery can be balanced, so that the battery has both relatively high energy density and a relatively long cycle life.

For example, the multi-element active material may include a layered metal oxide containing nickel, cobalt and manganese elements, and in the layered metal oxide containing the nickel, cobalt and manganese elements, based on the total molar weight of the nickel, cobalt and manganese elements, the molar proportion of the nickel element may be 80%, 82%, 85%, 88%, 90%, 92%, 95%, 96%, or the like.

For example, the multi-element active material may include a layered metal oxide containing nickel, cobalt and aluminum elements, and in the layered metal oxide containing the nickel, cobalt and aluminum elements, based on the total molar weight of the nickel, cobalt and aluminum elements, the molar proportion of the nickel element may be 80%, 82%, 85%, 88%, 90%, 92%, 95%, 96%, or the like.

In the present application, the composition of the multi-element active material in the positive electrode active material layer can be analyzed in combination with one or more of characterization methods such as X-ray diffraction (XRD), energy dispersive spectroscopy (EDS), and inductively coupled plasma emission spectroscopy (ICP). An analysis method for the relative molar content of the nickel element in the multi-element active material may include but is not limited to inductively coupled plasma emission spectrometry (ICP). For example, referring to EPA6010D-2014 "Inductively Coupled Plasma Atomic Emission Spectrometry", after the battery is disassembled, a positive electrode active material sample to be tested is separated from the electrode sheet, and after being treated by a chemical method and digested into a solution, the sample to be tested is nebulized and introduced into the plasma, and elements are excited and emit characteristic spectral lines. The element content is qualitatively and quantitatively analyzed based on the wavelengths and intensities of the spectral lines (where the intensity is proportional to the concentration). During an actual operation process, when the element composition of the multi-element active material is tested, one or more of conventional methods such as a mechanical stripping method and a chemical dissolution method may be used to obtain the positive electrode active material sample to be tested from the electrode sheet.

In some implementations of the present application, one or more of conventional instruments and conventional methods such as a scanning electron microscope, an energy dispersive spectrometer (EDS), an X-ray diffractometer, and an inductively coupled plasma emission spectrometer can be combined to perform qualitative and quantitative analysis on the positive electrode active material, to determine whether a lithium supplementing agent exists in the positive electrode active material and the type of the lithium supplementing agent.

For example, in the positive electrode active material layer, in addition to different element compositions, the lithium supplementing agent and the multi-element active material particles used as the positive electrode active material usually have differences in size and particle morphology, and the lithium supplementing agent does not completely disappear after delithiation, but residual elements and a particle skeleton remain. Delithiation of the lithium supplementing agent is usually accompanied by a certain degree of volume shrinkage, which creates gaps between the residual particle skeleton and the surrounding region thereof. Based on the foregoing distinctions, the probable positions of the lithium supplementing agent can be rapidly identified in scanning electron microscope testing, and the element composition and content of the lithium supplementing agent can be further determined in combination with an energy dispersive spectrometer (EDS).

For another example, the surface roughness of the multi-element active material particles is usually different from that of the lithium supplementing agent particles, and the position of the lithium supplementing agent may be quickly screened in scanning electron microscope testing in combination with the difference. In addition, it is also possible to further perform XRD characterization on the positive electrode active material sample to be tested in combination with an X-ray diffractometer, to determine the crystal structure of the lithium supplementing agent, and further determine the content of the lithium supplementing agent in combination with ICP testing.

For another example, the lithium supplementing agent is usually not completely delithiated after formation. Changes in diffraction peaks (such as peak positions or peak intensities) of the XRD spectrum of the positive electrode active material sample to be tested before and after charging and discharging may be compared to determine whether the lithium supplementing agent is added into the positive electrode active material and the type of the added lithium supplementing agent. In addition, due to differences between the lithium contents of the lithium supplementing agent and the multi-element active material themselves, as well as the different lithium (de)intercalation efficiency of the same during charging and discharging, the lithium contents of the lithium supplementing agent and the multi-element active material in a fully charged and fully discharged states also differ. For example, the delithiation efficiency of the lithium supplementing agent in the positive electrode active material is usually lower than the delithiation efficiency of the multi-element active material. A focused ion beam (FIB) in combination with secondary ion mass spectrometry (SIMS) testing can be used to characterize and differentiate the cross-section of the positive electrode active material layer, to determine whether a lithium supplementing agent exists in the positive electrode active material and the type of the lithium supplementing agent. In addition, during a charging/discharging process, due to the difference between the lithium (de)intercalation efficiency of the lithium supplementing agent and the multi-element active material, there is a significant difference in volume expansion of the material particles, which can be observed and characterized by in-situ confocal spectroscopy.

### [Positive electrode sheet]

In some embodiments of the present application, the longitudinal section of the positive electrode sheet along the thickness direction includes multi-element active material particles and lithium supplementing agent particles. The lithium supplementing agent particles include a transition metal element. The transition metal element may include a nickel element. In a single lithium supplementing agent particle, based on the total molar weight of the transition metal element, the molar ratio of the nickel element is n₁. The multi-element active material particles include a layered metal oxide containing nickel, cobalt and manganese elements. In the single multi-element active material particle, based on the total molar weight of the nickel, cobalt and manganese elements, the molar ratio of nickel element is n₂, and the ratio of n₁ to n₂ may be 1: (0.8 to 0.96), for example, may be 1:0.96, 1:0.95, 1:0.92, 1:0.9, 1:0.88, 1:0.85, 1:0.82, 1:0.8, or the like. Alternatively, the multi-element active material particles include a layered metal oxide containing nickel, cobalt and aluminum elements. In the single multi-element active material particle, based on the total molar weight of the nickel, cobalt and aluminum elements, the molar ratio of nickel element is n₃, and the ratio of n₁ to n₃ may be 1: (0.8 to 0.96), for example, may be 1:0.96, 1:0.95, 1:0.92, 1:0.9, 1:0.88, 1:0.85, 1:0.82, 1:0.8, or the like. The relative molar contents of Ni in the single multi-element active material particle and the single lithium supplementing agent particle can be obtained independently through EDS analysis, in combination with a scanning electron microscope and an energy dispersive spectrometer, respectively. Taking the initial state of the lithium supplementing agent being Li₂NiO₂ as an example, in addition to the Ni element, the multi-element active material particles further include a Co element, and a Mn element or an Al element. After the lithium supplementing agent is partially or completely delithiated, the non-lithium metal element in the residual elements is the Ni element, that is, n₂ or n₃ may be 1. Having the ratio of n₁ to n₂ or n₁ to n₃ within the given range is beneficial for enabling the battery to achieve relatively high energy density, relatively high initial efficiency, and a relatively long cycle life.

In some embodiments of the present application, the positive electrode active material may further include one or more of the following elements: P, Al, Mg, Zr, B, and Ti. Based on the total mass of the positive electrode active material, the contents of the P element, the Al element, the Mg element, the Zr element, the B element, and the Ti element may be independently less than or equal to 7,000 ppm, for example, may be independently less than or equal to 7,000 ppm, less than or equal to 6,000 ppm, less than or equal to 5,000 ppm, less than or equal to 4,000 ppm, less than or equal to 3,000 ppm, less than or equal to 2,000 ppm, less than or equal to 1,000 ppm, less than or equal to 500 ppm, or the like. The P, Al, Mg, Zr, B, and Ti elements in the positive electrode active material can be qualitatively and quantitatively analyzed in combination with conventional characterization methods such as ICP testing. The positive electrode active material includes a multi-element active material and a lithium supplementing agent, and the P, Al, Mg, Zr, B, and Ti elements are mainly derived from doping elements in the multi-element active material and the lithium supplementing agent, so that the contents of the several elements in the positive electrode active material are within the given ranges, which is beneficial for further enabling the battery to achieve relatively high energy density and a relatively long cycle life.

In some embodiments of the present application, the positive electrode active material may include a P element, and based on the total mass of the positive electrode active material, the content of the P element may be 50 ppm to 3,000 ppm, for example, may be 50 ppm, 200 ppm, 500 ppm, 1,000 ppm, 1,500 ppm, 2,000 ppm, 2,500 ppm, 3,000 ppm, or the like.

In some embodiments of the present application, the positive electrode active material may include an Al element, and based on the total mass of the positive electrode active material, the content of the Al element may be 50 ppm to 3,000 ppm, for example, may be 50 ppm, 200 ppm, 500 ppm, 1,000 ppm, 1,500 ppm, 2,000 ppm, 2,500 ppm, 3,000 ppm, or the like. Further, based on the total mass of the positive electrode active material, the content of the Al element may be 300 ppm to 2,000 ppm.

In some embodiments of the present application, the positive electrode active material may include a Mg element, and based on the total mass of the positive electrode active material, the content of the Mg element may be 50 ppm to 3,000 ppm, for example, may be 50 ppm, 200 ppm, 500 ppm, 1,000 ppm, 1,500 ppm, 2,000 ppm, 2,500 ppm, 3,000 ppm, or the like.

In some embodiments of the present application, the positive electrode active material may include a Zr element, and based on the total mass of the positive electrode active material, the content of the Zr element is 50 ppm to 4,000 ppm, for example, may be 50 ppm, 200 ppm, 500 ppm, 1,000 ppm, 1,500 ppm, 2,000 ppm, 2,500 ppm, 3,000 ppm, 3,500 ppm, 4,000 ppm, or the like. Further, based on the total mass of the positive electrode active material, the content of the Zr element may be 2,000 ppm to 4,000 ppm.

In some embodiments of the present application, the positive electrode active material may include a B element, and based on the total mass of the positive electrode active material, the content of the B element may be 50 ppm to 7,000 ppm, for example, 50 ppm, 200 ppm, 500 ppm, 1,000 ppm, 200 ppm, 3,000 ppm, 4,000 ppm, 5,000 ppm, 6,000 ppm, 7,000 ppm, or the like. Further, based on the total mass of the positive electrode active material, the content of the B element may be 500 ppm to 7,000 ppm.

In some embodiments of the present application, the positive electrode active material may include a Ti element, and based on the total mass of the positive electrode active material, the content of the Ti element may be 5 ppm to 3,000 ppm, for example, may be 5 ppm, 50 ppm, 200 ppm, 500 ppm, 1,000 ppm, 1,500 ppm, 2,000 ppm, 2,500 ppm, 3,000 ppm, or the like.

In some embodiments of the present application, at least a part of the surface of the lithium supplementing agent may be provided with a coating layer, and the coating layer includes one or more of the following elements: C, Al, Zr, P, and S. The qualitative analysis of the element species in the coating layer of the lithium supplementing agent can be performed by using characterization means such as energy dispersive spectroscopy (EDS), focused ion beam (FIB) in combination with secondary ion mass spectrometry (SIMS) testing. The air stability of the lithium supplementing agent is usually relatively poor. Taking Li₂NiO₂ as an example, it has a relatively strong basicity and is prone to reacting with water and CO₂, to form a coating layer on the surface of the lithium supplementing agent, so that the air stability of the lithium supplementing agent can be improved, and the generation of lithium-containing impurities on the surface can be reduced.

In some embodiments of the present application, the coating layer may include one or more of a carbon material, an aluminum oxide, a zirconium oxide, a lithium phosphide, and a lithium sulfide. The material type of the coating layer can be determined by using one or more of analysis methods such as energy dispersive spectroscopy (EDS), an X-ray diffraction method, focused ion beam (FIB) in combination with secondary ion mass spectrometry (SIMS) testing. The lithium supplementing agent has a relatively poor conductivity, and using the carbon material, the aluminum oxide, or the zirconium oxide as the material of the coating layer helps to improve the air stability of the lithium supplementing agent and reduce the generation of lithium-containing impurities on the surface. In addition, using the carbon material as the material of the coating layer is beneficial for improving the conductivity of the positive electrode sheet. Using fast ion conductor lithium phosphide or lithium sulfide as the material of the coating layer is beneficial for improving a lithium ion transmission rate and improving kinetic performance, thereby further facilitating the delithiation of the lithium supplementing agent and improving the lithium supplementing capacity. In this way, it is beneficial for further improving the electrochemical performance of the battery.

In some embodiments of the present application, the multi-element active material may include secondary particles. The secondary particles include primary particles. The lithium supplementing agent is usually irregular particles. The surface roughness of the secondary particles is greater than the surface roughness of the lithium supplementing agent particles. The microscopic morphologies of the multi-element active material and the lithium supplementing agent particles may be obtained by using a conventional device such as a scanning electron microscope to characterize the surface or the cross section of the positive electrode active material layer. The surface of the secondary particles is relatively rough, and the surface of the lithium supplementing agent particles is relatively smooth. The combination of the multi-element active material particles and the lithium supplementing agent particles with different morphologies is beneficial for improving the compaction density of the positive electrode sheet. In addition, the secondary particles may be spherical or spheroidal. In the present application, the spheroidal refers to a particle shape with a high sphericity and no obvious corners. Optionally, the sphericity of the spheroidal may be 0.9 to 1, and more optionally 0.95 to 1.

In some specific embodiments of the present application, the positive electrode active material layer may further include a conductive agent, and the conductive agent may include conductive carbon black and carbon nanotubes. The lithium supplementing agent is inferior in conductivity, and the carbon nanotubes are superior in conductivity to the conductive carbon black, but have relatively high cost. Compounding the zero-dimensional conductive carbon black and the one-dimensional carbon tubes as a conductive agent not only facilitates the dispersion of the carbon nanotubes, but also can form a better conductive network to implement relatively good conductivity. Therefore, not only the conductivity of the electrode sheet can be improved, but also the decomposition of the lithium supplementing agent and the dynamic performance of the battery can be improved, thereby further improving the energy density and the cycle life of the battery cell.

In some embodiments of the present application, the lithium supplementing agent may include LiₓM1_{y}M2_{g}O_{z}, where 1 ≤ x ≤ 6, 1 ≤ y ≤ 6, 2 ≤ z ≤ 12, 0 ≤ g ≤ 0.05, M1 may include one or more of Na, Ni, Co, Mn, and Fe elements, and M2 may include one or more of Al, Zr, and B elements. For example, the value of x may be 1, 2, 3, 4, 5, 6, or the like, or may be within a range defined by any of the foregoing values. Optionally, the value of x may be 1 < x ≤ 6, for example, may be 2 ≤ x ≤ 5. The value of y may be 1, 2, 3, 4, 5, 6, or the like, or may be within a range defined by any of the foregoing values. The value of z may be 2, 3, 4, 5, 6, 7, 8, 9, 10, 11 12, or the like, or may be a range defined by any of the foregoing values. Optionally, the value of z may be 1 < z ≤ 8, for example, may be 2 ≤ z ≤ 8. The value of g may be 0, 0.01, 0.02, 0.03, 0.04, 0.05, or the like. The charge gram capacity of LiₓM1_{y}O_{z} is 1 to 5 times that of the multi-element active material, and additional lithium can be provided during an initial charging process. When the positive electrode active material is doped with LiₓM1_{y}O_{z}, a relatively good positive electrode lithium supplementation effect can be achieved. In addition, the lithium supplementing agent LiₓM1_{y}O_{z} is doped with one or more of Al, Zr, and B, which not only helps to reduce the decomposition voltage of the lithium supplementing agent and improve the decomposition capability of the lithium supplementing agent, enabling the lithium supplementing agent to exert more capacity compensation, but also helps to stabilize the crystal structure of the lithium supplementing agent after decomposition, and reduce the dissolution of transition metal and a side reaction that may occur between the lithium supplementing agent and an electrolyte, thereby helping to further enabling the battery to achieve relatively high energy density, relatively high initial efficiency, and a relatively long cycle life. It may be understood that in a battery formation and use process, as a lithium-supplementing process proceeds, lithium in the lithium supplementing agent is partially or completely released, so that the lithium supplementing agent changes from an initial state to a partially delithiated state or a completely delithiated state, and in this case, x ≤ 1 and/or z ≤ 1 may occur.

In some embodiments of the present application, the value of g in the lithium supplementing agent LiₓM1_{y}M2_{g}O_{z} may be greater than 0, and based on the mass of the lithium supplementing agent LiₓM1_{y}M2_{g}O_{z}, the content of the doping element M4 may be 50 ppm to 1,000 ppm, such as 50 ppm, 200 ppm, 500 ppm, 800 ppm, 1,000 ppm, or the like.

In some embodiments of the present application, the lithium supplementing agent may include but is not limited to Li₂NiO₂ and/or Li₅FeO₄. In the preparation process of the positive electrode sheet, Li₂NiO₂ and/or Li₅FeO₄ can be directly incorporated into the positive electrode active material layer along with the multi-element active material. Li₂NiO₂ may form LiNiO₂ with a lithium deintercalation capability after delithiation. The LiNiO₂ in a delithiated state may be changed into Li₁₋ₓ₁NiO₂, 0 ≦ x1 ≦ 1, may be restored to LiNiO₂. Li₅FeO₄ has a strong lithium supplementing capability, and LiFeO₂ formed after delithiation will not bring about obvious side reactions. Therefore, using Li₂NiO ₂ and/or Li₅FeO₄ as the lithium supplementing agent can achieve a better capacity compensation effect. For example, the lithium supplementing agent may be Li₂NiO ₂, and Li₂NiO₂ may provide considerable lithium supplementing capacity only through valence change of Ni atoms at a relatively low potential, and does not need to provide capacity through valence change of oxygen atoms, thereby reducing the risk that the electrolyte is oxidized by oxygen radicals.

In some embodiments of the present application, the lithium supplementing agent may have an initial state, a partially delithiated state, and a completely delithiated state. When the lithium supplementing agent changes from the initial state to the partially delithiated state and the completely delithiated state, the lithium supplementing agent may include LiₙNiOₘ and/or LiₚFeO_{q}, where 0 ≤ n ≤ 2, 0 < m ≤ 2, 0 < p ≤ 5, and 0 < q ≤ 4. For example, the value of n may be 0, 0.5, 1, 1.5, 2, or the like, or may be within a range defined by any of the foregoing values. For example, the value of m may be 0.5, 1, 1.5, 2, or the like, or may be within a range defined by any of the foregoing values. The value of p may be 0.5, 1, 2, 3, 4, 5, or the like, or may be within a range defined by any of the foregoing values. The value of q may be 1, 2, 3, 4, or the like, or may be within a range defined by any of the foregoing values. For example, taking the lithium supplementing agent with the initial state of Li₂NiO₂ as an example, when lithium in Li₂NiO₂ is partially deintercalated, the composition of the lithium supplementing agent LiₙNiOₘ may include one or more compositions with n values falling within the ranges of 0 < n < 1, n = 1, and 1 < n < 2. When lithium in Li₂NiO₂ is completely deintercalated, the composition of the lithium supplementing agent LiₙNiOₘ may include NiOₘ. Taking the lithium supplementing agent with the initial state of Li₅FeO₄ as an example, when lithium in Li₅FeO₄ is partially deintercalated, the composition of the lithium supplementing agent LiₚFeO_{q} may include one or more compositions with p values falling within the ranges 1 < p < 2, 2 ≤ p < 3, 3 ≤ p < 4, and 4 ≤ p < 5. When lithium in Li₅FeO₄ is completely deintercalated, the composition of the lithium supplementing agent LiₚFeO_{q} may include LiFeO₂. Due to factors such as polarization, LiFeO₂ may undergo further delithiation, resulting in a LiₚFeO_{q} composition with p < 1.

In some embodiments of the present application, when the lithium supplementing agent changes from the initial state to the completely delithiated state, the lithium supplementing agent may include NiOₘ and/or LiₚFeO_{q}, where 0 < m ≤ 2, 0 < p ≤ 1, and 0 < q ≤ 2. For example, the value of m may be 0.5, 1, 1.5, 2, or the like, or may be within a range defined by any of the foregoing values. The value of p may be 0.2, 0.5, 0.8, 1, or the like, may be within a range defined by any of the foregoing values. The value of q may be 0.2, 0.5, 1, 1.5, 2, or the like, or may be within a range defined by any of the foregoing values. For example, taking lithium supplementing agents with the initial states of Li₂NiO₂ and Li₅FeO₄ as examples, when the lithium supplementing agents are completely delithiated, the lithium supplementing agents after delithiation may include but are not limited to NiO and/or LiFeO₂.

In some embodiments of the present application, the general formula of the multi-element active material may be LiₐNi_{b}Co_{c}M3_{d}M4ₑO_{f}, where 0.5 ≤ a ≤ 1.2, 0.8 ≤ b ≤ 0.96, 0 < c < 1, 0 < d < 1, 0 ≤ e ≤ 0.03, b + c + d + e = 1, 1.8, ≤ f ≤ 3.5, and M3 may include a Mn element or an Al element. M4 may include one or more of the following elements: Na, K, Mg, B, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce, and F. For example, the value of a may be 0.5, 0.6, 0.7, 0.8, 0.9, 1, 1.1, 1.2, or the like, or may be within a range defined by any of the foregoing values. The value of b may be 0.8, 0.82, 0.85, 0.88, 0.9, 0.92, 0.95, 0.96, or the like, or may be within a range defined by any of the foregoing values. The value of c may be 0.02, 0.05, 0.08, 0.1, 0.12, 0.15, 0.18, 0.2, or the like, or may be within a range defined by any of the foregoing values. The value of d may be 0.02, 0.05, 0.08, 0.1, 0.12, 0.15, 0.18, 0.2, or the like, or may be within a range defined by any of the foregoing values. The value of e may be 0, 0.005, 0.01, 0.015, 0.02, 0.025, 0.03, or the like, or may be within a range defined by any of the foregoing values. The value of f may be 1.8, 1.9, 2, 2.1, 2.2, 2.5, 3, 3.5, or the like, or may be within a range defined by any of the foregoing values. As described in the previous part, the composition of the multi-element active material can be analyzed by using one or more of characterization methods such as X-ray diffraction (XRD), energy dispersive spectroscopy (EDS), and inductively coupled plasma emission spectroscopy (ICP). The use of the multi-element active material satisfying the given general formula composition can better balance the energy density and the cycle life of the battery, and prolong the service life of the battery.

In some embodiments of the present application, in the multi-element active material LiₐNi_{b}Co_{c}M3_{d}M4ₑO_{f}, M4 may include one or more of the following elements: Al, Mg, Zr, B, P, and Ti. Doping with Al is beneficial for further improving the energy density of the battery, and doping with elements such as Zr or B is beneficial for further stabilizing the structure of the high-nickel multi-element active material and improving the cycle stability. In this way, it can further enable the battery to achieve both relatively high energy density and relatively good cycle stability, and prolong the service life of the battery.

In some embodiments of the present application, when the multi-element active material is doped with M4, on the longitudinal section of the positive electrode sheet along the thickness direction, in the single multi-element active material particle, based on the total molar weight of Ni, Co, M3, and M4, the molar proportion of Ni is n₄. In a single lithium supplementing agent particle, based on the total molar weight of M1 and M2, the molar proportion of Ni is n₁', and the ratio of n₁' to n₄ may be 1: (0.8 to 0.96), for example, may be 1:0.96, 1:0.95, 1:0.92, 1:0.9, 1:0.88, 1:0.85, 1:0.82, 1:0.8, or the like. Having the ratio of n₁' to n₄ within the given range is beneficial for enabling the battery to achieve relatively high energy density, relatively high initial efficiency, and a relatively long cycle life.

In some embodiments of the present application, the positive electrode current collector may be a conventional metal foil or a composite current collector (a composite current collector may be formed by disposing a metal material on a polymer base material). For example, the positive electrode current collector may include at least one of copper foil, aluminum foil, nickel foil, stainless steel foil, stainless steel mesh, and carbon-coated aluminum foil.

In some embodiments of the present application, the positive electrode active material layer may further optionally include a binder and at least one of other optional auxiliary agents. The binder and the auxiliary agent may be conventional choices in the art. For example, the binder may include but is not limited to one or more of styrene-butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethylcellulose (CMC), polyvinyl alcohol (PVA), and polyvinyl butyral (PVB). These materials are all commercially available.

### [Negative electrode plate]

In some embodiments of the present application, the silicon-based material may include at least one of a silicon-oxygen compound and a silicon-carbon compound. The gram capacities of a silicon carbon material and a silicon oxygen material both range from 800 mAh/g to 2000 mAh/g, which are much higher than that of graphite. Selecting the two silicon-based materials and the graphite as the negative electrode active material is beneficial for further improving the energy density of the battery. The type of the silicon-based material may be qualitatively analyzed by using one or more of conventional characterization methods such as X-ray diffraction analysis, X-ray photoelectron spectroscopy analysis, EDS, and spectroscopy.

In some embodiments of the present application, based on the total mass of the negative electrode active material, the mass ratio of the silicon element in the negative electrode active material may be 0.3% to 10%, for example, may be 0.3%, 0.5%, 0.8%, 1%, 2%, 3%, 4%, 5%, 6%, 7%, 8%, 9%, 10%, or the like. The analysis method of the silicon element content in the negative electrode active material may include but is not limited to ICP testing. Appropriately increasing the amount of the silicon-based material in the negative electrode sheet is beneficial for further improving the energy density of the battery, so that the content of the silicon element in the negative electrode active material is within the given range. This can reduce the adverse effects of the silicon-based material on the initial efficiency and the cycle performance of the battery on the basis of improving the energy density of the battery, and is further beneficial for enabling the battery to achieve relatively high energy density, relatively high initial efficiency, and a relatively long cycle life.

In some embodiments of the present application, the silicon-based material may include a silicon-oxygen compound, and based on the total mass of the negative electrode active material, the mass ratio of the silicon element in the negative electrode active material may be 0.5% to 5%, for example, may be 0.5%, 0.8%, 1%, 2%, 3%, 4%, 5%, or the like. In this way, it is beneficial for enabling the battery to achieve relatively high energy density, relatively high initial efficiency, and a relatively long cycle life on the basis of a lower amount of silicon-based material.

In some embodiments of the present application, the silicon-based material may include a silicon-carbon compound, and based on the total mass of the negative electrode active material, the mass ratio of the silicon element in the negative electrode active material may be 3% to 10%, for example, may be 3%, 4%, 5%, 6%, 7%, 8%, 9%, 10%, or the like. In this way, the battery can achieve relatively high energy density, relatively high initial efficiency, and a relatively long cycle life.

In some embodiments of the present application, the negative electrode current collector may be a conventional metal foil or a composite current collector (for example, a composite current collector may be formed by disposing a metal material on a polymer base material). For example, the negative electrode current collector may be metal foil such as copper foil.

In some embodiments of the present application, the negative electrode active material layer generally further includes a binder and a conductive agent. The conductive agent is used to improve the conductivity of the negative electrode active material layer. The binder is used to firmly bind the negative electrode active material and the binder to the negative electrode current collector. The types of the conductive agent and the binder for the negative electrode sheet are not specifically limited in the present application, and may be selected according to actual needs. For example, the conductive agent may include but is not limited to at least one of superconducting carbon, acetylene black, carbon black, ketjen black, carbon dots, carbon nanotubes, graphene, and carbon nanofibers. For example, the binder may include but is not limited to at least one of styrene butadiene rubber (SBR), styrene-butadiene rubber (SBCs), water-based acrylic resin, and carboxymethyl cellulose (CMC). In addition, the negative electrode active material layer may further optionally include a thickener, such as carboxymethyl cellulose (CMC). However, the present application is not limited thereto, and other materials that can be used as a thickener for a negative electrode sheet of a lithium ion battery can alternatively be used.

### [Electrolyte solution]

Generally, the battery cell further includes: an electrolyte, where the electrolyte may include an organic solvent and an electrolyte salt.

For example, taking the lithium battery as an example, the electrolyte may include an organic solvent and a lithium salt, and the organic solvent may include a cyclic carbonate and a linear carbonate. In this way, it is more beneficial for obtaining a battery having high energy density. For example, the cyclic carbonate may include ethylene carbonate (EC) and/or propylene carbonate (PC), for example, may include EC. For example, the linear carbonate may include one or more of ethyl methyl carbonate (EMC), dimethyl carbonate (DMC), and diethyl carbonate (DEC). For example, the lithium salt may include but is not limited to at least one of lithium hexafluorophosphate, lithium difluorooxalatoborate, lithium tetrafluoroborate, lithium bisoxalatoborate, lithium perchlorate, lithium hexafluoroarsenate, lithium bis(fluorosulfonyl)imide, lithium trifluoromethylsulfonate, and lithium bis(trifluoromethylsulfonyl)imide.

In some embodiments of the present application, the electrolyte may further optionally include other additives capable of improving certain performance of the battery. For example, the additive may include a negative electrode film-forming additive, or may include a positive electrode film-forming additive, and may further include an additive capable of improving the overcharge performance of the battery, an additive capable of improving the high-temperature performance of the battery, an additive capable of improving the low-temperature performance of the battery, or the like. For example, the additive may include but is not limited to fluoroethylene carbonate (FEC) and/or vinylene carbonate (VC), or the like. Adding FEC helps to form a stable CEI film on the positive electrode sheet, and form a tough SEI film on the surface of the negative electrode sheet, thereby reducing the consumption of more Li caused by the expansion of the silicon-based material. Adding VC helps to form a stable polycarbonate SEI film on the surface of the negative electrode sheet, thereby further improving the cycle performance of the battery.

It may be understood that the concentration of the lithium salt in the electrolyte and the mass percentage of the additive in the electrolyte can be flexibly selected according to actual needs, and are not particularly limited herein.

Generally, the battery cell further includes a separator. The material of the separator is not particularly limited in the present application, and any well-known porous structure separator with electrochemical stability and mechanical stability can be selected according to actual needs. For example, the separator may include, but is not limited to, a single-layer film or a multi-layer film containing at least one of glass fiber, non-woven fabric, polyethylene, polypropylene, and polyvinylidene fluoride.

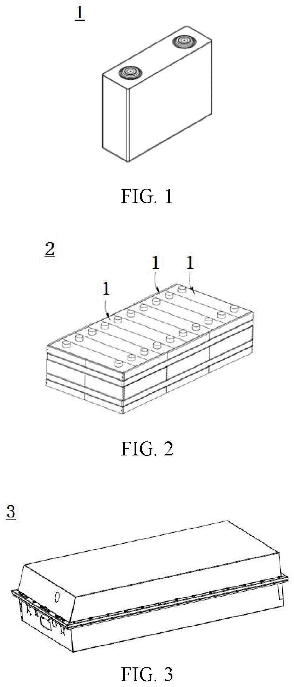

The shape of the battery cell is not particularly limited in the embodiments of the present application. For example, in some embodiments of the present application, the battery cell may be a pouch battery, a square battery, or a cylindrical battery. FIG. 1 shows a battery cell 1 with a square structure as an example.

In some embodiments of the present application, the battery cell may be a cylindrical battery. The cylindrical battery may include a housing. Two ends of the housing are respectively a first end and a second end. The first end may be connected to the negative electrode sheet through a housing wall of the housing at the first end. For example, a tab of the negative electrode sheet may be connected to the housing wall of the housing at the first end through a first current collecting portion. The second end may be provided with a cap. The cap may include an electrode pole. The electrode pole may be connected to the positive electrode sheet. For example, a tab of the positive electrode sheet may be connected to the electrode pole through a second current collecting portion. Optionally, the cap may be a steel cap. The arrangement of the cap structure not only facilitates the welding connection of the cylindrical battery through a current collecting portion (such as a current collecting bar, or the like), but also facilitates pressure relief after battery failure, thereby reducing a safety risk that may be caused by a large gas production of a battery with a high nickel and high silicon system due to thermal runaway.

In some embodiments, the battery cell may include an outer package. The outer package is used to package an anode plate, a cathode plate, and an electrolyte.

In some embodiments, the outer package may include a housing, and a cover plate. The housing may include a bottom plate and side plates connected to the bottom plate, and the bottom plate and the side plates may define an accommodating chamber. The housing has an opening communicating with the accommodating chamber, and the cover plate can cover the opening to close the accommodating chamber.

The positive electrode sheet, the negative electrode sheet, and the separator may be formed into an electrode assembly through a winding process or a lamination process. The electrode assembly is packaged within the accommodating chamber. The battery cell may have one or more electrode assemblies, and the number may be adjusted as needed.

In some implementations, the outer package of the battery cell may include a hard casing, for example, a hard plastic casing, an aluminum casing, or a steel casing.

The outer package of the battery cell may alternatively include a soft package, such as a pouch-type soft package. The material of the soft package may be a plastic, such as at least one of polypropylene (PP), polybutylene terephthalate (PBT), and polybutylene succinate (PBS).

A second aspect of the present application provides a battery device, including: the battery cell according to the first aspect of the present application. Optionally, the battery device includes at least one of a battery module, a battery pack, and an energy storage device.

In some implementations, the battery device may be a battery cell, or may be a battery module or a battery pack assembled from battery cells. The battery module or the battery pack may include a plurality of battery cells, and the specific number of the battery cells may be adjusted according to application and capacity of the battery module.

FIG. 2 shows a battery module 2 as an example. Referring to FIG. 2, in the battery module 2, a plurality of battery cells 1 may be arranged sequentially in the length direction of the battery module 2. Certainly, the battery cells may alternatively be arranged in any other manner. Further, the plurality of battery cells 1 may be fastened by using fasteners. The battery module 2 may further include a casing having an accommodating space in which the plurality of battery cells 1 are accommodated. In some embodiments, the above battery module may be further assembled into a battery pack. The number of battery modules contained in the battery pack may be adjusted according to the application and capacity of the battery pack.

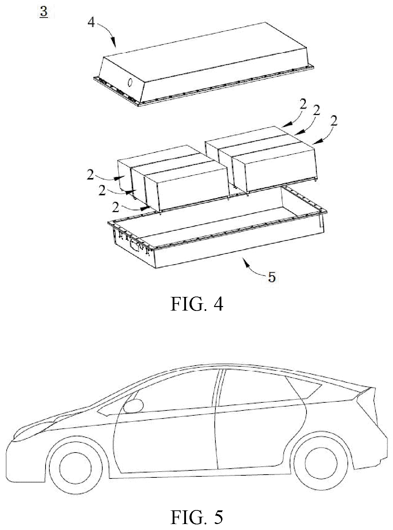

FIG. 3 and FIG. 4 show a battery pack 3 as an example. Referring to FIG. 3 and FIG. 4, a battery case and a plurality of battery modules 2 disposed in the battery case may be included in the battery pack 3. The battery case includes an upper case 4 and a lower case 5, the upper case 4 being capable of covering the lower case 5 and forming a closed space for accommodating the battery modules 2. The plurality of battery modules 2 may be arranged in any manner in the battery case.

A third aspect of the present application provides an electric device, including: the battery cell according to the first aspect of the present application, where the battery cell or the battery device is used to provide electric energy.

Specifically, the battery cell or the battery device may be used as a power supply for the electric device, or as an energy storage unit for the electric device. The electric device may include but is not limited to a mobile device (e.g., a mobile phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, a ship, a satellite, or an energy storage system.

FIG. 5 shows an electric device as an example. The electric device is a pure electric vehicle, a hybrid electric vehicle, a plug-in hybrid electric vehicle, or the like. For another example, the electric device may include a mobile phone, a tablet computer, or a notebook computer. Generally, the electric apparatus requires thinness, and may use a battery cell as a power supply.

Examples of the present application are described below. The embodiments described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

### (1) Positive electrode sheet

The positive electrode sheet had positive electrode current collector aluminum foil. Positive electrode active material layers were disposed on two opposite surfaces of the aluminum foil. The thickness of the aluminum foil was 17 µm. The thicknesses of the positive electrode active material layers disposed on the two surfaces of the aluminum foil are equal. The single-side coating areal density of the positive electrode active material layer was 0.393 g/1540.25 mm². The positive electrode active material included a multi-element active material and a lithium supplementing agent. Based on the mass of the positive electrode active material layer, the mass of the positive electrode active material layer included 98% by mass of the positive electrode active material (where the multi-element active material was lithium nickel cobalt manganese oxide (layered metal oxide), the lithium supplementing agent was Li₂NiO₂, aluminum oxide was provided on the surface of the lithium supplementing agent, and based on the total mass of the positive electrode active material layer, the mass ratio of the lithium supplementing agent was 1.8%), 0.8% by mass of conductive agent (including 75% by mass of super P conductive carbon black and 25% by mass of carbon nanotubes CNTs), and 1.2% by mass of polyvinylidene fluoride (PVDF) binder, where the molar ratio of Ni, Co, and Mn in the lithium nickel cobalt manganese oxide was 0.85:0.1:0.05.

### (2) Negative electrode sheet

The negative electrode sheet included positive electrode current collector copper foil. Negative electrode active material layers are disposed on two opposite surfaces of the copper foil. The thickness of the copper foil is 11 µm. The thicknesses of the negative electrode active material layers disposed on the two surfaces of the copper foil were equal. The single-side coating areal density of the negative electrode active material layer was 0.216 g/1540.25 mm². The negative electrode active material included artificial graphite and a silicon-based material SiO. Based on the mass of the negative electrode active material layer, the negative electrode active material layer included 96% by mass of negative electrode active material (based on the total mass of the negative electrode active material, the mass ratio of the silicon element in the negative electrode active material is 2.3%), 1% by mass of conductive agent (Super P), 1.8% by mass of binder styrene-butadiene rubber (SBR), and 1.2% by mass of thickener sodium carboxymethylcellulose (CMC-Na).

### (3) Electrolyte

The electrolyte included an organic solvent, an electrolyte salt and an additive. The solvent was prepared by mixing EC, DMC and EMC in a mass ratio of 3:4:3. The electrolyte salt is LiPF₆, and the concentration of LiPF₆ in the electrolyte is 1 mol/L. The additive includes fluoroethylene carbonate (FEC), and the mass ratio of FEC in the electrolyte is 1.5%.

(4) Separator: The separator was a polyethylene film coated with a ceramic coating on one surface, and the total thickness of the separator was 14 µm.

(5) Battery cell: The battery cell included the positive electrode sheet, the negative electrode sheet, the separator, and the electrolyte described above. The ceramic coating of the separator faced the positive electrode sheet.

### Testing:

### (1) Elemental Composition

An instrument was operated with reference to EPA6010D-2014 "Inductively Coupled Plasma Atomic Emission Spectrometry". A sample was chemically treated and digested into a solution, and nebulized and introduced into the plasma, and elements were excited to emit characteristic spectral lines. The content of the elements was qualitatively and quantitatively analyzed according to the wavelength and intensity (proportional to the concentration) of the spectral lines.

### (2) Energy density:

At 25 °C, a battery cell after formation was charged at a constant current of 1/3C to 4.25 V, and then charged at the constant voltage of 4.25 V to a current of 0.05C. After resting for 5 min, the battery cell was discharged at 1/3C to 2.5 V, and the discharge capacity was recorded as C. After the size of the battery cell was measured, the volume of the same was calculated as V, and then, the volumetric energy density of the battery cell could be obtained as 3.7 × C/V.

### (3) Cycle performance

In a 25 °C environment, the battery cell after formation was allowed to be rested for 30 min, and discharged at a constant current of 1/3C to 2.5 V. Then, a charging-discharging cycle was performed according to the following steps: resting for 5 minutes, charging at a constant current of 1/3C to 4.25 V, and then charging at the constant voltage of 4.25 V until the current drops to 0.05C; resting for 5 min; and discharging at a constant current of 1/3C to 2.5 V, and recording the discharge capacity at this time as C₀'. After 500 cycles, the discharge capacity C₅₀₀ at the 500-th cycle was recorded. A capacity retention rate after 500 cycles was calculated according to the following formula:
$Capacity retention rate after 500 cycles \left(%\right) : {C}_{500} / {C}_{0} ′ \times 100 % .$

### Comparative Example 1

The negative electrode sheet and the electrolyte in the battery cell were the same as those in Example 1, except that in the positive electrode sheet, the positive electrode active material only included the multi-element active material and did not include the lithium supplementing agent. However, the mass ratio of the positive electrode active material in the positive electrode active material layer was the same as that in Example 1.

### Comparative Example 2

The positive electrode sheet and the electrolyte in the battery cell were the same as those in Example 1, except that in the negative electrode sheet, the negative electrode active material only included the artificial graphite and did not contain the silicon-based material. However, the mass ratio of the negative electrode active material in the negative electrode active material layer was the same as that in Example 1.

### Example 2

The negative electrode sheet and the electrolyte in the battery cell were the same as those in Example 1, except that in the positive electrode sheet, the multi-element active material was lithium nickel cobalt aluminum oxide (layered metal oxide), and the molar ratio of nickel, cobalt and aluminum in the lithium nickel cobalt aluminum oxide was 0.85:0.1:0.05.

### Comparative Example 3

The negative electrode sheet and the electrolyte in the battery cell were the same as those in Example 2, except that in the positive electrode sheet, the positive electrode active material only included the multi-element active material and did not include the lithium supplementing agent. However, the mass ratio of the positive electrode active material in the positive electrode active material layer was the same as that in Example 1.

### Comparative Example 4

The positive electrode sheet and the electrolyte in the battery cell were the same as those in Example 2, except that in the negative electrode sheet, the negative electrode active material only included the artificial graphite and did not contain the silicon-based material. However, the mass ratio of the negative electrode active material in the negative electrode active material layer was the same as that in Example 1.

Differences between Example 1 and Example 2 as well as between Comparative Example 1 to Comparative Example 4 were shown in Table 1.

**Table 1**

| Item | Composition of positive electrode active material | Mass ratio of lithium supplementing agent in positive electrode active material | Composition of negative electrode active material | Mass ratio of Si element in negative electrode active material | Energy density of battery cell (Wh/L) | Capacity retention rate at 500 cycles |
|---|---|---|---|---|---|---|
| Example 1 | Lithium nickel cobalt manganese oxide, lithium supplementing agent | 1.8% | Graphite, SiO | 2.5% | 260 | 93.2% |
| Comparative Example 1 | Lithium nickel cobalt manganese oxide | 0.0% | Graphite, SiO | 2.5% | 250 | 85.4% |
| Comparative Example 2 | Lithium nickel cobalt manganese oxide, lithium supplementing agent | 1.8% | Graphite | 0.0% | 246 | 94.5% |
| Example 2 | Nickel cobalt manganese aluminum oxide, lithium supplementing agent | 1.8% | Graphite, SiO | 2.5% | 257 | 92.6% |
| Comparative Example 3 | Nickel cobalt manganese aluminum oxide | 0.0% | Graphite, SiO | 2.5% | 248 | 85.0% |
| Comparative Example 4 | Nickel cobalt manganese aluminum oxide, lithium supplementing agent | 1.8% | Graphite | 0.0% | 245 | 94.3% |

It can be seen from Example 1, Example 2, and Comparative Example 1 to Comparative Example 4 that the battery cell provided in the present application has both relatively high energy density and a relatively high cycle capacity retention rate, which indicates that in the present application, by using the high-nickel multi-element active material such as the lithium nickel cobalt manganese oxide or the lithium nickel cobalt aluminum oxide (layered metal oxide) in combination with the lithium supplementing agent in the positive electrode sheet, while simultaneously using the graphite in combination with the silicon-based material in the negative electrode sheet, the battery cell can achieve both relatively high energy density and a relatively long cycle life.

### Example 3, Example 4, and Example 5

The negative electrode sheet and the electrolyte in the battery cell were the same as those in Example 1, except that in the positive electrode sheet, the molar ratios of the nickel, cobalt and manganese elements in the multi-element active material lithium nickel cobalt manganese oxide were different.

### Differences between Examples 3, 4, 5 and Example 1 are shown in Table 2.

**Table 2**

| Item | Molar ratio of nickel, cobalt and manganese in multi-element active material of positive electrode sheet | Energy density of battery cell (Wh/L) | Capacity retention rate at 500 cycles |
|---|---|---|---|
| Example 1 | 0.85:0.1:0.05 | 260 | 93.2% |
| Example 3 | 0.8:0.1:0.1 | 255 | 94.5% |
| Example 4 | 0.9:0.05:0.05 | 264 | 90.4% |
| Example 5 | 0.96:0.03:0.01 | 267 | 85.6% |

It can be seen from Example 1, Example 3, Example 4, and Example 5 that as the content of the Ni element in the multi-element active material of the positive electrode sheet increases, the energy density of the battery cell also increases, and the cycle capacity retention of the battery cells is in a decreasing trend. The reason may be that as the content of the Ni element increases, the stability of the multi-element active material decreases, and the probability of lithium-nickel shuffling increases, thereby affecting the lithium intercalation amount of the positive electrode sheet and the cycle performance of the battery cell, which indicates that controlling the nickel content of the high-nickel multi-element active material within an appropriate range is beneficial for further enabling the battery cell to achieve both relatively high energy density and a relatively long cycle life.

### Example 6, Example 7, Example 8, and Example 9

The positive electrode sheet and the electrolyte in the battery cell were the same as those in Example 1, except that in the negative electrode sheet, the content of the silicon-based material in the negative electrode active material was different, and the mass ratio of the Si element in the negative electrode active material was also different. However, the mass ratio of the negative electrode active material in the negative electrode active material layer was the same as that in Example 1.

### Differences between Examples 6, 7, 8, 9 and Example 1 are shown in Table 3.

**Table 3**

| Item | Composition of negative electrode active material | Mass ratio of Si element in negative electrode active material | Energy density of battery cell (Wh/L) | Capacity retention rate at 500 cycles |
|---|---|---|---|---|
| Example 1 | Graphite, SiO | 2.5% | 260 | 93.2% |
| Comparative Example 2 | Graphite | 0.0% | 246 | 94.5% |
| Example 6 | Graphite, SiO | 0.3% | 252 | 94.1% |
| Example 7 | Graphite, SiO | 1.9% | 256 | 93.6% |
| Example 8 | Graphite, SiO | 3.2% | 263 | 92.4% |
| Example 9 | Graphite, SiO | 4.5% | 266 | 86.9% |

It can be seen from Example 1, Comparative Example 2, and Example 6 to Example 9 that as the content of the silicon-based material in the negative electrode active material increases, the energy density of the battery cell also increases, and the cycle capacity retention rate of the battery cell shows a decreasing trend, which indicates that controlling the amount of the silicon-based material in the negative electrode active material within an appropriate range is beneficial for further enabling the battery cell to achieve both relatively high energy density and a relatively longer cycle life.

### Example 10, Example 11

The negative electrode sheet and the electrolyte in the battery cell were the same as those in Example 1, except that in the positive electrode sheet, the composition of the conductive agent in the positive electrode active material layer was different.

### Example 12, Example 13, Example 14

The negative electrode sheet and the electrolyte in the battery cell were the same as those in Example 1, except that in the positive electrode sheet, the surface of the lithium supplementing agent was provided with a coating material.

### Differences between Example 10 to Example 14, and Example 1 are shown in Table 4.

**Table 4**

| Item | Coating material on surface of lithium supplementing agent | Composition of conductive agent in positive electrode active material layer | Energy density of battery cell (Wh/L) | Capacity retention rate at 500 cycles |
|---|---|---|---|---|
| Example 1 | Aluminum oxide | Super P, CNT | 260 | 93.2% |
| Example 10 | Aluminum oxide | CNT | 262 | 94.0% |
| Example 11 | Aluminum oxide | Super P | 258 | 92.6% |
| Example 12 | Lithium sulfide | Super P, CNT | 262 | 93.4% |
| Example 13 | Lithium phosphide | Super P, CNT | 262 | 93.5% |
| Example 14 | Zirconium oxide | Super P, CNT | 258 | 94.0% |

It can be seen from Example 1, Example 10, and Example 11 that the energy density and cycle capacity retention rate of the battery cell are improved after the carbon nanotubes are doped into the conductive carbon black, which indicates that combining the conductive carbon black with an appropriate amount of carbon nanotubes as the positive electrode conductive agent is further beneficial for improving the energy density and the cycle life of the battery cell.

It can be seen from Example 12, Example 13, Example 14, and Example 1 that after the surface of the lithium supplementing agent is coated with the lithium phosphide or the lithium sulfide, the energy density of the battery cell is improved.

### Example 15

The positive electrode sheet and the electrolyte in the battery cell were the same as those in Example 6, except that in the negative electrode sheet, the type and the amount of the silicon-based material in the negative electrode active material were different, and the mass ratio of the Si element in the negative electrode active material was also different. However, the mass ratio of the negative electrode active material in the negative electrode active material layer was the same as that in Example 6.

### Example 16, Example 17

The electrolyte in the battery cell was the same as that in Example 15, except that in the positive electrode sheet, the composition of the lithium supplementing agent was different. However, the mass ratio of the lithium supplementing agent in the positive electrode active material was the same as that in Example 15. In the negative electrode sheet, the amount of the silicon-based material in the negative electrode active material was different, and the mass ratio of the Si element in the negative electrode active material was also different. However, the mass ratio of the negative electrode active material in the negative electrode active material layer was the same as that in Example 15.

### Example 18

The positive electrode sheet and the electrolyte in the battery cell were the same as those in Example 15, except that in the negative electrode sheet, the amount of the silicon-based material in the negative electrode active material was different, and the mass ratio of the Si element in the negative electrode active material was also different. However, the mass ratio of the negative electrode active material in the negative electrode active material layer was the same as that in Example 15.

### Differences between Examples 15, 16, 17, 18, and Example 6 are shown in Table 5.

**Table 5**

| Item | Composition of lithium supplementing agent in positive electrode sheet | Composition of negative electrode active material | Mass ratio of Si element in negative electrode active material | Energy density of battery cell (Wh/L) | Capacity retention rate at 500 cycles |
|---|---|---|---|---|---|
| Example 6 | Li₂NiO₂ | Graphite, SiO | 0.3% | 252 | 94.1% |
| Comparative Example 2 | Li₂NiO₂ | Graphite | 0.0% | 246 | 94.5% |
| Example 15 | Li₂NiO₂ | Graphite, SiC | 0.25% | 250 | 94.3% |
| Example 16 | Li₅FeO₄ | Graphite, SiC | 3.5% | 261 | 90.5% |
| Example 17 | Li₂NiO₂ and Li₅FeO₄ in a mass ratio of 1:1 | Graphite, SiC | 7.0% | 265 | 88.6% |
| Example 18 | Li₂NiO₂ | Graphite, SiC | 11.0% | 270 | 84.3% |

It can be seen from Example 6, Example 15, and Comparative Example 2 that replacing the silicon-oxygen compound with the silicon-carbon compound in combination with the artificial graphite can also improve the energy density of the battery cell.

It can be seen from Example 16, Example 17, and Example 18 that using Li₅FeO₄ to replace some or all of the lithium supplementing agent Li₂NiO₂ can also enable the battery cell to achieve relatively high energy density, which indicates that using other lithium-rich materials can also achieve a relatively good lithium supplementing effect, and improve the energy density and the cycle life of the battery cell. It can be further illustrated from Comparative Example 2 and Example 18 that controlling the amount of the silicon-based material in the negative electrode sheet within an appropriate range is beneficial for further enabling the battery cell to achieve both relatively high energy density and relatively better cycle performance.

### Example 19, Example 20

The negative electrode sheet and the electrolyte in the battery cell were the same as those in Example 1, except that in the positive electrode sheet, the multi-element active material included a doping element.

### Example 21, Example 22, Example 23

The negative electrode sheet and the electrolyte in the battery cell were the same as those in Example 1, except that in the positive electrode sheet, the multi-element active material included a doping element, and the lithium supplementing agent included a doping element.

### Example 24

The negative electrode sheet and the electrolyte in the battery cell were the same as those in Example 1, except that in the positive electrode sheet, the multi-element active material included a doping element, the lithium supplementing agent included a doping element, and the surface of the lithium supplementing agent was coated with a carbon material and a lithium phosphide.

Differences between Example 19 to Example 24, and Example 1 are shown in Table 6.

**Table 6**

| Item | Type of doping element X in positive electrode multi-element active material | Type of doping element Y in lithium supplementing agent | Coating material on surface of lithium supplementing agent | Based on total mass of positive electrode active material, contents of X element and Y element | Energy density of battery cell (Wh/L) | Capacity retention rate at 500 cycles |
|---|---|---|---|---|---|---|
| Example 1 | None | None | Aluminum oxide | Including 94 ppm of Al element | 260 | 93.2% |
| Example 19 | Al | None | Aluminum oxide | Including 1126 ppm of Al element | 262 | 93.4% |
| Example 20 | Mg | None | Aluminum oxide | Including 94 ppm of Al element and 584 ppm of Mg element | 260 | 93.4% |
| Example 21 | B | Al | Aluminum oxide | Including 948 ppm of Al element and 1,560 ppm of B element | 264 | 93.5% |
| Example 22 | P | B | Aluminum oxide | Including 526 ppm of P element, 94 ppm of Al element and 3,456 ppm of B element | 263 | 93.6% |
| Example 23 | Ti | Zr | Aluminum oxide | Including 94 ppm of Al element, 1,874 ppm of Zr element and 954 ppm of Ti element | 264 | 93.6% |
| Example 24 | P, Mg | B, Al, Zr | Carbon material and lithium phosphide | Including 1,674 ppm of P element, 728 ppm of Al element, 92 ppm of Mg element, 1,436 ppm of Zr element, and 3,360 ppm of B element | 265 | 94.2% |

It can be seen from Example 1 and Examples 19 to 24 that in the positive electrode sheet, introducing an appropriate amount of doping elements into the multi-element active material or the lithium supplementing agent can also adjust the energy density and/or the cycle capacity retention rate of the battery cell. It can be further seen from Examples 21 to 24 that in the positive electrode sheet, by introducing appropriate contents and appropriate types of doping elements into the multi-element active material and the lithium supplementing agent, the energy density and the cycle capacity retention rate of the battery cell can be further improved, which indicates that introducing the appropriate amounts of doping elements into the multi-element active material and the lithium supplementing agent in the positive electrode further enables the battery cell to achieve both relatively high energy density and relatively good cycle performance, thereby prolonging the service life of the battery cell.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, comprising:
a positive electrode sheet, the positive electrode sheet comprising a positive electrode current collector and a positive electrode active material layer disposed on at least one side of the positive electrode current collector, the positive electrode active material layer comprising a positive electrode active material, and the positive electrode active material comprising a multi-element active material and a lithium supplementing agent, wherein
the multi-element active material comprises a layered metal oxide containing nickel, cobalt and manganese elements, and in the layered metal oxide containing the nickel, cobalt and manganese elements, based on the total molar weight of the nickel, cobalt and manganese elements, the molar ratio of the nickel element is greater than or equal to 80%; or the multi-element active material comprises a layered metal oxide containing nickel, cobalt and aluminum elements, and in the layered metal oxide containing the nickel, cobalt and aluminum elements, based on the total molar weight of the nickel, cobalt and aluminum elements, the molar ratio of the nickel element is greater than or equal to 80%; and
the lithium supplementing agent comprises a nickel-containing metal oxide and/or an iron-containing metal oxide; and
a negative electrode sheet, the negative electrode sheet comprising a negative electrode current collector and a negative electrode active material layer disposed on at least one side of the negative electrode current collector, the negative electrode active material layer comprising a negative electrode active material, and the negative electrode active material comprising graphite and a silicon-based material.

2. The battery cell according to claim 1, wherein the silicon-based material comprises a silicon-oxygen compound and/or a silicon-carbon compound.

3. The battery cell according to claim 1 or 2, wherein based on the total mass of the negative electrode active material, the mass ratio of the silicon element is 0.3% to 10%.

4. The battery cell according to any one of claims 1 to 3, wherein the silicon-based material comprises a silicon-oxygen compound, and based on the total mass of the negative electrode active material, the mass ratio of the silicon element is 0.5% to 5%.

5. The battery cell according to any one of claims 1 to 3, wherein the silicon-based material comprises a silicon-carbon compound, and based on the total mass of the negative electrode active material, the mass ratio of the silicon element is 3% to 10%.

6. The battery cell according to any one of claims 1 to 5, wherein the longitudinal section of the positive electrode sheet along the thickness direction comprises multi-element active material particles and lithium supplementing agent particles, the lithium supplementing agent particles comprise a transition metal element, the transition metal element comprises a nickel element, and in a single lithium supplementing agent particle, based on the total molar weight of the transition metal element, the molar ratio of the nickel element is n₁; and
the multi-element active material particles comprise a layered metal oxide containing nickel, cobalt and manganese elements, and in a single multi-element active material particle, based on the total molar weight of the nickel, cobalt and manganese elements, the molar ratio of the nickel element is n₂, and the ratio of n₁ to n₂ is 1: (0.8 to 0.96); or
the multi-element active material particles comprise a layered metal oxide containing nickel, cobalt and aluminum elements, and in a single multi-element active material particle, based on the total molar weight of the nickel, cobalt and aluminum elements, the molar ratio of the nickel element is n₃, and the ratio of n₁ to n₃ is 1: (0.8 to 0.96).

7. The battery cell according to any one of claims 1 to 6, wherein the positive electrode active material further comprises one or more of the following elements: P, Al, Mg, Zr, B, and Ti, based on the total mass of the positive electrode active material, the contents of the P element, the Al element, the Mg element, the Zr element, the B element, and the Ti element are each independently less than or equal to 7,000 ppm.

8. The battery cell according to any one of claims 1 to 7, wherein the positive electrode active material comprises a P element, and based on the total mass of the positive electrode active material, the content of the P element is 50 ppm to 3,000 ppm.

9. The battery cell according to any one of claims 1 to 8, wherein the positive electrode active material comprises an Al element, and based on the total mass of the positive electrode active material, the content of the Al element is 50 ppm to 3,000 ppm, optionally 300 ppm to 2,000 ppm.

10. The battery cell according to any one of claims 1 to 9, wherein the positive electrode active material comprises a Mg element, and based on the total mass of the positive electrode active material, the content of the Mg element is 50 ppm to 3,000 ppm.

11. The battery cell according to any one of claims 1 to 10, wherein the positive electrode active material comprises a Zr element, and based on the total mass of the positive electrode active material, the content of the Zr element is 50 ppm to 4,000 ppm, optionally 2,000 ppm to 4,000 ppm.

12. The battery cell according to any one of claims 1 to 11, wherein the positive electrode active material comprises a B element, and based on the total mass of the positive electrode active material, the content of the B element is 50 ppm to 7,000 ppm, optionally 500 ppm to 7,000 ppm.

13. The battery cell according to any one of claims 1 to 12, wherein the positive electrode active material comprises a Ti element, and based on the total mass of the positive electrode active material, the content of the Ti element is 5 ppm to 3,000 ppm.

14. The battery cell according to any one of claims 1 to 13, wherein at least a part of the surface of the lithium supplementing agent is provided with a coating layer, and the coating layer comprises one or more of the following elements: C, Al, Zr, P, and S.

15. The battery cell according to claim 14, wherein the coating layer comprises one or more of a carbon material, an aluminum oxide, a zirconium oxide, a lithium phosphide, and a lithium sulfide.

16. The battery cell according to any one of claims 1 to 15, wherein the multi-element active material comprises secondary particles, and the surface roughness of the secondary particles is greater than the surface roughness of the lithium supplementing agent particles.

17. The battery cell according to claim 16, wherein the secondary particles are spherical or spheroidal.

18. The battery cell according to any one of claims 1 to 17, wherein the positive electrode active material layer further comprises a conductive agent, and the conductive agent comprises conductive carbon black and carbon nanotubes.

19. The battery cell according to any one of claims 1 to 18, wherein the lithium supplementing agent comprises LiₓM1_{y}M2_{g}O_{z}, wherein 1 ≤ x ≤ 6, 1 ≤ y ≤ 6, 2 ≤ z ≤ 12, 0 ≤ g ≤ 0.05, M1 comprises one or more elements of Na, Ni, Co, Mn, and Fe, and M2 comprises one or more elements of Al, Zr, and B.

20. The battery cell according to any one of claims 1 to 18, wherein the lithium supplementing agent comprises Li₂NiO₂ and/or Li₅FeO₄.

21. The battery cell according to any one of claims 1 to 18, wherein the lithium supplementing agent comprises LiₙNiOₘ and/or LiₚFeO_{q}, wherein 0 ≤ n ≤ 2, 0 < m ≤ 2, 0 < p ≤ 5, and 0 < q ≤ 4.

22. The battery cell according to any one of claims 1 to 18, wherein the lithium supplementing agent comprises NiOₘ and/or LiₚFeO_{q}, wherein 0 < m ≤ 2, 0 < p ≤ 1, and 0 < q ≤ 2.

23. The battery cell according to any one of claims 1 to 22, wherein the general formula of the multi-element active material is LiₐNi_{b}Co_{c}M3_{d}M4ₑO_{f}, wherein 0.5 ≤ a ≤ 1.2, 0.8 ≤ b ≤ 0.96, 0 < c < 1, 0 < d < 1, 0 ≤ e ≤ 0.03, b + c + d + e = 1, 1.8 ≤ f ≤ 3.5, and M3 comprises a Mn element or an Al element; and M4 comprises one or more of the following elements: Na, K, Mg, B, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce, and F.

24. The battery cell according to claim 23, wherein M4 comprises one or more of the following elements: Al, Mg, Zr, B, P, and Ti.

25. A battery device, comprising the battery cell according to any one of claims 1 to 24, wherein the battery device comprises at least one of a battery module, a battery pack, or an energy storage device.

26. An electric device, comprising the battery cell according to any one of claims 1 to 24 or the battery device according to claim 25, wherein the battery cell or the battery device is used to supply electric energy.
